# EUROPÄISCHE PATENTSCHRIFT

(11) **EP 1 234 649 B1**
(45) Veröffentlichungstag und Bekanntmachung des Hinweises auf die Patenterteilung: **01.04.2009**
(21) Anmeldenummer: 02002423.8
(22) Anmeldetag: 01.02.2002
(51) Int. Cl.: B29C 44/12, B29C 70/76, B60J 10/12, B29C 33/00, B29C 33/30, B29C 33/12

(54) **Vorrichtung zum Umschäumen einer transparenten Scheibe für ein Fahrzeugdach**
Device to overmould a foaming product on the periphery of an automobile roof glass
Dispositif pour surmouler un produit expansible sur la périphérie de la vitre d'un toit pour véhicule automobile

(30) Priorität: 16.02.2001 DE 10107743
(43) Veröffentlichungstag der Anmeldung: 28.08.2002
(73) Patentinhaber: Webasto AG, 82131 Stockdorf (DE)
(72) Erfinder: Stangl, Karl, 86919 Utting (DE); Dünzinger, Christian, 84066 Mallersdorf-Pfaffenberg (DE); Brandner, Hans Jürgen, 85211 Dachau (DE); Hagenmeyer, Cord Hermann, 81245 München (DE)
(74) Vertreter: Wiese, Gerhard

(56) Entgegenhaltungen:
- EP-A- 0 845 340
- DE-A- 19 808 113

## Beschreibung

Die vorliegende Erfindung betrifft eine Vorrichtung zum Umschäumen einer transparenten Scheibe für ein Fahrzeugdach gemäß dem Oberbegriff von Anspruch 1.

Eine solche gattungsgemäße Vorrichtung ist aus der DE 198 08 113 A1 bekannt, wobei die obere Formgebungseinrichtung fest, d.h. nicht austauschbar, in der Vorrichtung vorgesehen ist, während die untere Formgebungseinrichtung austauschbar gestaltet ist, um bei gleicher oberer Formgebungseinrichtung die Fertigung unterschiedlicher Varianten von Fahrzeugdachscheiben, bei welchen die Halterungsteile unterschiedlich positioniert sind, zu ermöglichen. Nachteilig bei dieser bekannten Vorrichtung ist, dass nur geringfügig, d.h. im Bereich der unteren Formgebungseinrichtung, abweichende Varianten von Fahrzeugdachscheiben mit der Vorrichtung hergestellt werden können, während bei komplett neuen Modellreihen die gesamte Vorrichtung neu erstellt werden muss, was einen großen Zeitaufwand und hohe Investitionen mit sich bringt, was insbesondere dann problematisch ist, wenn die Stückzahlen einer einzelnen Modellreihe relativ gering sind.

Es ist Aufgabe der vorliegenden Erfindung, eine Vorrichtung zum Umschäumen einer transparenten Scheibe für ein Fahrzeugdach zu schaffen, welche ein besonders wirtschaftliches Herstellen von Fahrzeugdachscheiben ermöglicht.

Diese Aufgabe wird erfindungsgemäß gelöst durch eine Vorrichtung, wie sie in Anspruch 1 definiert ist. Bei dieser erfindungsgemäßen Lösung ist vorteilhaft, dass dadurch, dass die untere und die obere Formgebungseinrichtung, die in der Regel stark produktspezifisch sind, austauschbar gestaltet ist, mittel der so erzielten Modulbauweise die Umschäumungsvorrichtung mit geringem Aufwand durch Austauschen der entsprechenden Komponenten an eine vollständig neue Modellreihe angepasst werden kann, was einerseits die Erstellungsdauer für die Vorrichtung und andererseits die Werkzeuginvestitionskosten für die neue Modellreihe verringern.

Bevorzugte Ausgestaltungen der Erfindung ergeben sich aus den Unteransprüchen.

Die vorliegende Erfindung wird nachfolgend anhand der beigefügten Zeichnungen beispielhaft näher erläutert. Dabei zeigen:
- Fig. 1: eine Aufsicht auf das Unterwerkzeug einer erfindungsgemäßen Vorrichtung zum Umschäumen einer transparenten Scheibe für ein Fahrzeugdach;
- Fig. 2: eine Ansicht von unten auf das entsprechende Oberwerkzeug;
- Fig. 3: eine Seitenansicht der Vorrichtung von Fig. 1 bzw. 2 in geschlossener Stellung; und
- Fig. 4: eine Ansicht wie Fig. 3, wobei die Vorrichtung jedoch in geöffneter Stellung dargestellt ist.

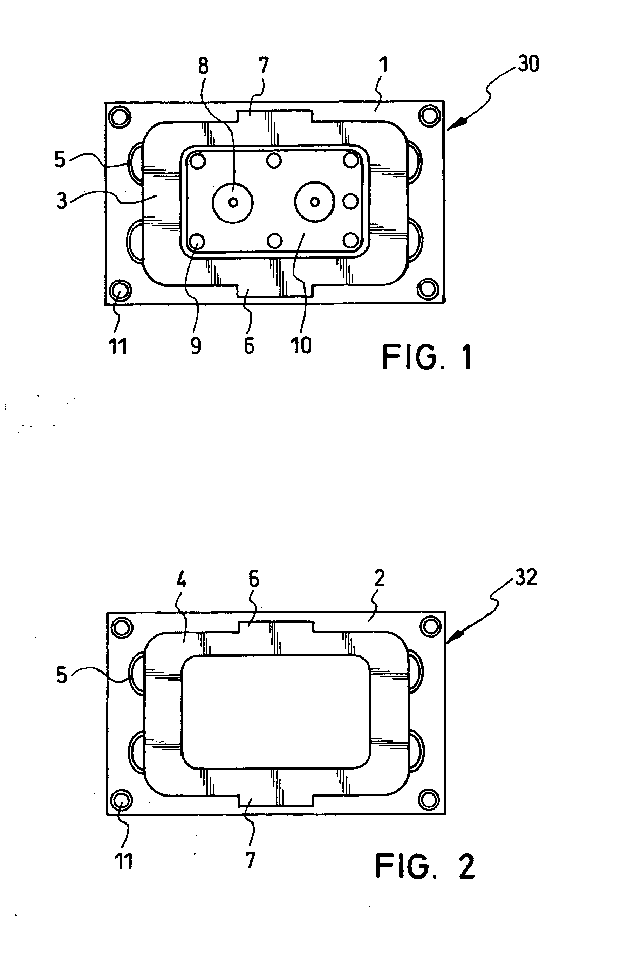

Gemäß den Fign. 1 bis 4 umfasst das Unterwerkzeug 30 einer Umschäumungsvorrichtung 34 eine beheizte Grundplatte 1, auf welcher ein unterer Formgebungsring 3, der beispielsweise aus Stahl oder Aluminium gefertigt ist, befestigt ist. Die Art der Befestigung ist dabei so gewählt, dass der untere Formgebungsring 3 leicht ausgetauscht werden kann, wobei seitlich an dem unteren Formgebungsring 3 montierte Handgriffe 5 den Austausch des Formgebungsrings 3 per Hand erleichtern. An den beiden Breitseiten des Formgebungsrings 3 sind eine Ringvergrößerung 6 für den Anguss bzw. eine Ringvergrößerung 7 für den Austrieb vorgesehen. Die untere Grundplatte 1, die im wesentlichen rechteckig ausgebildet ist, ist in ihren Randbereichen mit einer Werkzeugführung 11 versehen.

Im mittleren Bereich, welcher von dem Formgebungsring 3 umgeben wird, ist die untere Grundplatte 1 durchbrochen, wobei in diesem Bereich ein anhebbarer Auswerferboden 10 vorgesehen ist, welcher im Randbereich mit Abstützelementen 9 versehen ist, auf welche die zu umschäumende transparente Scheibe 17 gelegt wird. Im mittleren Bereich des Auswerferbodens 10 sind zwei Saugeinrichtungen 8 für die Positionierung bzw. Fixierung der Scheibe 17 vorgesehen.

Bei der Scheibe 17 handelt es sich um eine transparente Scheibe für ein öffnungsfähiges Fahrzeugdach, beispielsweise ein Schiebedach, Schiebe-Hebe-Dach oder Spoilerdach, die vorzugsweise als Glasscheibe oder Kunststoffscheibe ausgebildet ist.

Gemäß Fig. 2 umfasst das Oberwerkzeug 32 eine beheizte obere Grundplatte 2, die im wesentlichen rechteckig ausgebildet ist und in ihren Randbereichen mit einer Werkzeugführung 11 versehen ist. Die obere Grundplatte 2 trägt einen oberen Formgebungsring 4, der analog zu dem unteren Formgebungsring 3 an der oberen Grundplatte 2 so befestigt ist, dass er leicht austauschbar ist, wobei für einen solchen Austausch ebenfalls Handgriffe 5 an dem oberen Formgebungsring 4 vorgesehen sind. Der obere Formgebungsring 4 ist ebenfalls beispielsweise aus Stahl oder Aluminium ausgebildet und weist an seinen Breitseiten eine Ringvergrößerung 6 für den Anguss bzw. eine Ringvergrößerung 7 für den Austrieb auf.

Das Oberwerkzeug 32 und das Unterwerkzeug 30 sind in Höhenrichtung mittels eines nicht dargestellten Antriebs relativ zueinander verstellbar und bilden zusammen die Vorrichtung 34 zum Umschäumen der Scheibe 17.

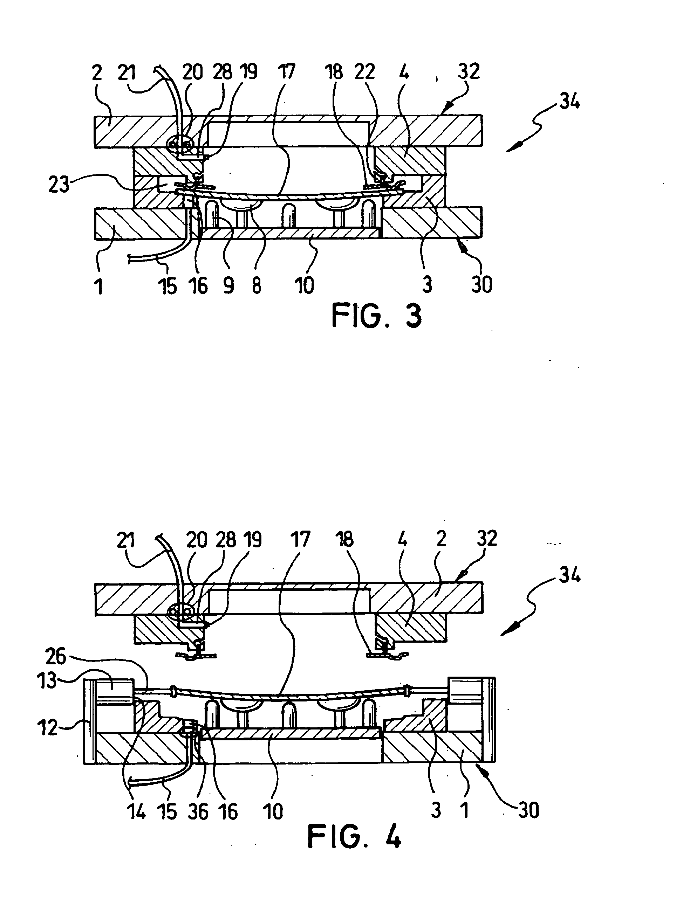

Gemäß Fig. 4 wird im geöffneten Zustand des Oberwerkzeugs 32 und des Unterwerkzeugs 30 die Glasscheibe 17 auf die Abstützelemente 9 des Auswerferbodens 10 gelegt und mittels einer Zentrierungseinrichtung, die zu beiden Schmalseiten des unteren Formgebungsrings 3 einen Linearmotor 13 mit Wegabfrage sowie ein seitlich zur Anlage an die Scheibe 17 zu bringendes Zentrierungselement 26 aufweist, bezüglich des unteren Formgebungsrings 3 zentriert. Der Linearmotor 13 ist mittels einer verstellbaren Befestigung 12 an der unteren Grundplatte 1 befestigt. Ferner weist die Zentrierungseinrichtung einen Anschlag 14 für das Zentrierungselement 26 auf. Der Linearmotor 13 dient zum Verstellen des Zentrierungselements 26. Die Zentrierungseinrichtung ist in an sich bekannter Weise ausgebildet, wobei der Verstellweg der Zentrierelemente 26 jedoch so groß gewählt ist, dass Scheiben 17 mit unterschiedlichen Abmessungen in der Vorrichtung 34 bearbeitet werden können. Nach dem Zentrierungsvorgang wird die Scheibe mittels der Saugeinrichtungen 8 bezüglich des Unterwerkzeugs 30 fixiert.

Statt mit einem Linearmotor mit Wegabfrage versehen zu sein, kann die Zentrierungseinrichtung auch in an sich bekannter Weise kostengünstiger ausgebildet sein. Insbesondere kann auch die ganze Zentrierungseinrichtung austauschbar ausgestaltet sein, um eine möglichst gute Anpassung an einen breiten Bereich unterschiedlicher Scheibenabmessungen zu ermöglichen.

Gemäß Fig. 3 und 4 ist das Oberwerkzeug 32 mit einem Medienanschluss 21, z.B. für Hydraulik, Luft und Elektrik, versehen, welcher durch die obere Grundplatte 2 hindurch geführt ist und zu einer Medienschnittstelle 20 führt, welche an der Grenze zwischen der oberen Grundplatte 2 und dem oberen Formgebungsring 4 ausgebildet ist, um die Medienversorgung des oberen Formgebungsrings 4 zu ermöglichen. Die Medienschnittstelle 20 ist so ausgebildet, dass bei Austausch des oberen Formgebungsrings 4 die Medienversorgung desselben in einfacher Weise, beispielsweise mittels Steckverbindungen, hergestellt werden kann. Innerhalb des oberen Formgebungsrings 4 ist ein Medienkanal 28 vorgesehen, welcher mit der Medienschnittstelle 20 verbunden ist und zu einem Anschluss 19 führt, an welchen teilespezifische Elemente angeschlossen werden können, z.B. ein Schieber für Einlegeteile, bei welchen es sich beispielsweise um Haltewinkel 18 handeln kann, die zur Befestigung der Scheibe 17 an der Deckelmechanik im Fahrzeug dienen. Diese angesprochenen teilespezifischen Elemente sind in Fig. 3 und 4 nicht dargestellt. Mit dem Bezugszeichen 22 ist ein an dem oberen Formgebungsring 4 ausgebildetes Fixierungselement bezeichnet, welches beispielsweise als Rastnase ausgebildet sein kann, um ein Einlegeteil (im dargestellten Beispiel einen Haltewinkel 18) vor dem Schäumvorgang an dem oberen Formgebungsring 4 zu fixieren (siehe Fig. 4).

Nachdem die Scheibe 17 wie in Fig. 4 gezeigt bezüglich des Unterwerkzeugs 30 fixiert wurde und das Oberwerkzeug 32 mit den Einlegeteilen 18 bestückt wurde, wird das Oberwerkzeug 32 abgesenkt, wobei der obere Formgebungsring 4 und der untere Formgebungsring 3 im Randbereich der Scheibe 17 einen formgebenden Bereich 23 zwischen sich bilden. Das Unterwerkzeug 30 ist mit einem Vakuumanschluss 15 versehen, der durch die untere Grundplatte 1 hindurchgeführt ist und mit einer Schnittstelle 36 zu einem Vakuumfeld 16 versehen ist, welches in dem unteren Formgebungsring 3 ausgebildet ist. Die Schnittstelle 36 kann analog zu der Medienschnittstelle 21 des Oberwerkzeugs 32 an der Grenzfläche zwischen der unteren Grundplatte 1 und dem unteren Formgebungsring 3 ausgebildet sein. Falls für den unteren Formgebungsring 3 zusätzliche Medien erforderlich sein sollten, kann die Schnittstelle 36 entsprechend modifiziert werden. Vorzugsweise ist die Schnittstelle 36 so ausgebildet, dass beim Austausch des unteren Formgebungsrings 3 die Medienversorgung desselben auf einfache Weise, beispielsweise mittels Steckverbindung, hergestellt werden kann.

Beim Umschäumungsvorgang wird Umschäumungsmaterial in den formgebenden Bereich 23 mittels einer nicht dargestellten Schaumzufuhr-Einrichtung eingeleitet. Das Einleiten von Umschäumungsmaterial in den formgebenden Bereich 23 dient einerseits dazu, um den Umfangsrandbereich der Scheibe 17 mit einem Umschäumungsbereich zu versehen, und andererseits dazu Einlegeteile, wie die Haltewinkel 18, an der Scheibe zu befestigen.

Nach Abschluss des Umschäumungsvorgangs wird die Umschäumungsvorrichtung 34 durch Anheben des Oberwerkzeugs 32 wieder geöffnet, so dass die umschäumte Scheibe 17 durch Anheben des Auswerferbodens 10 aus dem Unterwerkzeug 30 entnommen werden kann.

Bei der dargestellten Ausführungsform sind der untere Formgebungsring 3, der obere Formgebungsring 4, die Abstützelemente 9 sowie der Anschlag 14 austauschbar ausgebildet, um die Umrüstung der Umschäumvorrichtung 34 für unterschiedliche Modellreihen bezüglich der Scheibe 17 bzw. der Einlegeteile 18 zu ermöglichen. Dadurch kann gewährleistet werden, dass insbesondere der formgebende Bereich 23, die Einlegeteilfixierung 22, der Anschluss 19 für teilespezifische Elemente sowie die Abstützelemente 9 spezifisch auf eine bestimmte Modellreihe abgestimmt werden können, ohne dass eine komplett neue Umschäumungsvorrichtung 34 erstellt werden müsste.

Die obere und untere Grundplatte 1 bzw. 2, die Haltegriffe 5, die Saugelemente 8, der Auswerferboden 10, die Werkzeugführung 11, die Zentriereinrichtung mit der Befestigung 12, dem Linearmotor 13 sowie dem Zentrierelement 26, der Vakuumanschluss 15, das Vakuumfeld 16, die Medienschnittstelle 20 sowie der Medienanschluss 21 können als Standardelemente für alle Modellreihen gleich ausgebildet sein.

## Patentansprüche

1. Vorrichtung zum Umschäumen einer transparenten Scheibe (17) für ein Fahrzeugdach, mit einem Oberwerkzeug (32), das eine an einem oberen Träger (2) montierte obere Formgebungseinrichtung (4) umfasst, und einem Unterwerkzeug (30), das eine an einem unteren Träger (1) montierte untere Formgebungseinrichtung (3) umfasst, wobei die Formgebungseinrichtungen als Begrenzung für den zu umschäumenden Bereich (23) wirken, wobei das Oberwerkzeug und das Unterwerkzeug zum Einlegen bzw. Herausnehmen der Scheibe relativ zueinander verstellbar sind und die untere Formgebungseinrichtung austauschbar ist, **dadurch gekennzeichnet, dass** die obere Formgebungseinrichtung (4) austauschbar ist, um eine Anpassung der Umschäumungsvorrichtung (34) an unterschiedliche Scheiben (17), und/oder unterschiedliche Formen des zu umschäumenden Bereichs (23) zu ermöglichen.

2. Vorrichtung nach Anspruch 1, **dadurch gekennzeichnet, dass** ein Auswerfer (10) mit Abstützelementen (9) für die Scheibe vorgesehen ist, wobei die Abstützelemente (9) austauschbar sind, um eine Anpassung der Umschäumungsvorrichtung (34) an unterschiedliche Scheiben (17) zu ermöglichen.

3. Vorrichtung nach Anspruch 1 oder 2, **dadurch gekennzeichnet, dass** eine Einrichtung (22) zum Positionieren von in dem zu umschäumenden Bereich anzubringenden Teilen (18) vorgesehen ist, die austauschbar ist, um eine Anpassung der Umschäumungsvorrichtung (34) an unterschiedliche in dem zu umschäumenden Bereich anzubringenden Teilen (18) zu ermöglichen.

4. Vorrichtung nach Anspruch 3, **dadurch gekennzeichnet, dass** die Einrichtung (22) zum Positionieren von in dem zu umschäumenden Bereich anzubringenden Teilen (18) mindestens zum Teil in die obere Formgebungseinrichtung (4) integriert ist.

5. Vorrichtung nach Anspruch 4, **dadurch gekennzeichnet, dass** die Einrichtung (22) zum Positionieren von in dem zu umschäumenden Bereich anzubringenden Teilen (18) eine Rastnase (22) und einen betätigbaren Schieber umfasst.

6. Vorrichtung nach einem der Ansprüche 3 bis 5, **dadurch gekennzeichnet, dass** es sich bei den Teilen um Haltewinkel (18) für die Scheibe (17) handelt.

7. Vorrichtung nach einem der vorhergehenden Ansprüche, **dadurch gekennzeichnet, dass** eine Zentriereinrichtung (12, 13, 14, 26) für die Scheibe (17) vorgesehen ist, die so ausgebildet ist, dass sie an unterschiedliche Scheiben anpassbar ist.

8. Vorrichtung nach Anspruch 7, **dadurch gekennzeichnet, dass** die Zentriereinrichtung (12, 13, 14, 26) einen Anschlag (14) umfasst, der austauschbar ist, um eine Anpassung an unterschiedliche Scheiben (17) zu ermöglichen.

9. Vorrichtung nach einem der vorhergehenden Ansprüche, **dadurch gekennzeichnet, dass** es sich bei dem zu umschäumenden Bereich (23) um den Randbereich der Scheibe (17) handelt und die Formgebungseinrichtungen (3, 4) ringförmig ausgebildet sind.

10. Vorrichtung nach Anspruch 9, **dadurch gekennzeichnet, dass** die obere Formgebungseinrichtung (4) und die untere Formgebungseinrichtung (3) mit Haltegriffen (5) für den manuellen Austausch versehen sind.

11. Vorrichtung nach einem der vorhergehenden Ansprüche, **dadurch gekennzeichnet, dass** zwischen dem oberen Träger (2) und der oberen Formgebungseinrichtung (4) eine Medienschnittstelle (20) für der oberen Formgebungseinrichtung zuzuführende Medien vorgesehen ist.

12. Vorrichtung nach einem der vorhergehenden Ansprüche, **dadurch gekennzeichnet, dass** die untere Formgebungseinrichtung (3) mit einem Vakuumfeld (16) versehen ist, welches über eine zwischen dem unteren Träger (1) und der unteren Formgebungseinrichtung befindlichen Schnittstelle (36) mit einem Vakuumanschluss (15) verbunden ist.

## Claims

1. Device for overmoulding a foaming product on the periphery of a vehicle roof glass (17), having an upper tool (32) which comprises an upper shaping device (4) mounted on an upper carrier (2), and a lower tool (30) which comprises a lower shaping device (3) mounted on a lower carrier (1), the shaping devices acting as a limit for the region (23) to be overmoulded peripherally with foam, it being possible for the upper tool and the lower tool to be displaced relative to each other for the insertion and removal of the glass and the lower shaping device being interchangeable, **characterized in that** the upper shaping device (4) is interchangeable, in order to permit adaptation of the peripheral foam overmoulding device (34) to different glasses (17) and/or different shapes of the region (23) to be overmoulded peripherally with foam.

2. Device according to Claim 1, **characterized in that** an ejector (10) having supporting elements (9) for the glass is provided, the supporting elements (9) being interchangeable, in order to permit adaptation of the peripheral foam overmoulding device (34) to different glasses (17).

3. Device according to Claim 1 or 2, **characterized in that** a device (22) is provided for positioning components (18) to be fitted in the region to be overmoulded peripherally with foam and is interchangeable, in order to permit adaptation of the peripheral foam overmoulding device (34) to different components (18) to be fitted in the region to be overmoulded peripherally with foam.

4. Device according to Claim 3, **characterized in that** the device (22) for positioning components (18) to be fitted in the region to be overmoulded peripherally with foam is at least partly integrated into the upper shaping device (4).

5. Device according to Claim 4, **characterized in that** the device (22) for positioning components (18) to be fitted in the region to be overmoulded peripherally with foam comprises a latching lug (22) and a slider that can be actuated.

6. Device according to one of Claims 3 to 5, **characterized in that** the components are retaining angles (18) for the glass (17).

7. Device according to one of the preceding claims, **characterized in that** a centring device (12, 13, 14, 26) for the glass (17) is provided and is formed in such a way that it can be adapted to different glasses.

8. Device according to Claim 7, **characterized in that** the centring device (12, 13, 14, 26) comprises a stop (14), which is interchangeable, in order to permit adaptation to different glasses (17).

9. Device according to one of the preceding claims, **characterized in that** the region (23) to be overmoulded peripherally with foam is the edge region of the glass (17), and the shaping devices (3, 4) are ring-like.

10. Device according to Claim 9, **characterized in that** the upper shaping device (4) and the lower shaping device (3) are provided with handgrips (5) for the manual interchange.

11. Device according to one of the preceding claims, **characterized in that** a media interface (20) for media to be fed to the upper shaping device is provided between the upper carrier (2) and the upper shaping device (4).

12. Device according to one of the preceding claims, **characterized in that** the lower shaping device (3) is provided with a vacuum area (16), which is connected to a vacuum connection (15) via an interface (36) located between the lower carrier (1) and the lower shaping device.

## Revendications

1. Dispositif pour surmouler un produit expansible sur la périphérie d'une vitre transparente (17) pour un toit de véhicule, avec un moule supérieur (32) qui comprend un organe supérieur de modelage (4) monté sur un élément porteur supérieur (2), et avec un moule inférieur (30) qui comprend un organe inférieur de modelage (3) monté sur un élément porteur inférieur (1), sachant que les organes de modelage jouent le rôle de délimitation pour la région à surmouler (23), sachant que le moule supérieur et le moule inférieur peuvent être déplacés l'un par rapport à l'autre afin de mettre en place ou de retirer la vitre et que l'organe inférieur de modelage est interchangeable, **caractérisé en ce que** l'organe supérieur de modelage (4) est interchangeable afin de permettre une adaptation du dispositif de surmoulage (34) à différentes vitres (17) et/ou à différentes formes de la région à surmouler (23).

2. Dispositif selon la revendication 1, **caractérisé en ce qu'**il est prévu un éjecteur (10) avec des éléments de soutien (9) pour la vitre, sachant que les éléments de soutien (9) sont interchangeables afin de permettre une adaptation du dispositif de surmoulage (34) à différentes vitres (17).

3. Dispositif selon la revendication 1 ou 2, **caractérisé en ce qu'**il est prévu un organe (22) pour positionner des pièces (18) à installer dans la région à surmouler, organe qui est interchangeable afin de permettre une adaptation du dispositif de surmoulage (34) à différentes pièces (18) à installer dans la région à surmouler.

4. Dispositif selon la revendication 3, **caractérisé en ce que** l'organe (22) pour positionner des pièces (18) à installer dans la région à surmouler est intégré au moins pour partie dans l'organe supérieur de modelage (4).

5. Dispositif selon la revendication 4, **caractérisé en ce que** l'organe (22) pour positionner des pièces (18) à installer dans la région à surmouler comprend un ergot de crantage (22) et un coulisseau pouvant être actionné.

6. Dispositif selon l'une des revendications 3 à 5, **caractérisé en ce que** les pièces sont des équerres de maintien (18) pour la vitre (17).

7. Dispositif selon l'une des revendications précédentes, **caractérisé en ce qu'**il est prévu un organe de centrage (12, 13, 14, 26) pour la vitre (17), organe qui est conçu de telle sorte qu'il peut être adapté à différentes vitres.

8. Dispositif selon la revendication 7, **caractérisé en ce que** l'organe de centrage (12, 13, 14, 26) comprend une butée (14) qui est interchangeable afin de permettre une adaptation à différentes vitres (17).

9. Dispositif selon l'une des revendications précédentes, **caractérisé en ce que** la région à surmouler (23) est la région de bord de la vitre (17), et les organes de modelage (3, 4) sont réalisés annulaires.

10. Dispositif selon la revendication 9, **caractérisé en ce que** l'organe supérieur de modelage (4) et l'organe inférieur de modelage (3) sont pourvus de poignées de maintien (5) pour le remplacement manuel.

11. Dispositif selon l'une des revendications précédentes, **caractérisé en ce qu'**une interface de produits (20) pour des produits à apporter à l'organe supérieur de modelage est prévue entre l'élément porteur supérieur (2) et l'organe supérieur de modelage (4).

12. Dispositif selon l'une des revendications précédentes, **caractérisé en ce que** l'organe inférieur de modelage (3) est doté d'une zone sous vide (16) qui est reliée à un raccord de vide (15) par l'intermédiaire d'une interface (36) se trouvant entre l'élément porteur inférieur (1) et l'organe inférieur de modelage.
